# EUROPÄISCHE PATENTANMELDUNG

(11) **EP 4 756 604 A1**
(43) Veröffentlichungstag der Anmeldung: **10.06.2026**
(21) Anmeldenummer: 24218045.3
(22) Anmeldetag: 06.12.2024
(51) Int. Cl.: G06F 7/58

(54) **QUANTUM-ZUFALLSZAHLENGENERATOR ZUM SICHEREN ERZEUGEN VON ZUFALLSZAHLEN MIT ZWEI ENTROPIEQUELLEN**

(71) Anmelder: Elmos Semiconductor SE, 51379 Leverkusen (DE)
(72) Erfinder: Finkeldey, Fabian, Bruchsal (DE)
(74) Vertreter: Durm Patentanwälte PartG mbB

(57) **Zusammenfassung**

Ein Quantum-Zufallszahlengenerator (10) zur Erzeugung von Zufallszahlen umfassend wenigstens zwei Entropiequellen (20) zum Erzeugen eines Events; wenigstens eine Auswerteeinheit (30) zur Verarbeitung des Events; eine Ausgabeschnittstelle (50) zum Ausgeben einer Binär-Zufallszahl; wobei die Entropiequelle (20) eine Photonenquelle und einen Photonenempfänger umfasst; die Photonenquelle zufällig Photonen emittiert, die von dem Photonenempfänger erfasst werden und als Event an die Auswerteeinheit (30) übermittelt werden; die Auswerteeinheit (30) dazu ausgebildet ist, um die Events zu verarbeiten und Binär-Zufallszahlen zu generieren, die mittels der Ausgabeschnittstelle (50) ausgegeben werden.

## Beschreibung

Die vorliegende Erfindung betrifft einen Quantum-Zufallszahlengenerator zur Erzeugung von Zufallszahlen mit wenigstens zwei Entropiequellen zum Erzeugen eines Events, wenigstens einer Auswerteeinheit zur Verarbeitung des Events und zum Erzeugen einer Binär-Zufallszahl und mit einer Ausgabeschnittstelle zum Ausgeben einer Binär-Zufallszahl.

Heute gewinnt eine sichere und zuverlässige Erzeugung von wahren (echten) Zufallszahlen (True Random Numbers) zunehmend an Bedeutung, insbesondere für die Verschlüsselung und Kryptografie, aber auch in Netzwerken oder verteilten Netzwerken ohne zentrale Kontrollinstanz. Sicherheit ist oft direkt von der Qualität und Unvorhersehbarkeit der Zufallszahlen abhängig. Dies gilt besonders für die Verschlüsselung, Authentifizierung und andere sicherheitsrelevante Operationen. Zufallszahlengeneratoren müssen deshalb absolut unvorhersehbare Sequenzen erzeugen, wobei Quantenmechanismen und die Erzeugung von Photonen zu den besten Methoden gehören. Aus der DE 10 2022 125 572 A1 ist z. B. ein Rechner bekannt, der zumindest einen quantenprozessbasierenden Generator für echte Zufallszahlen (Englisch: Quantum Random Number Generator: QRNG) als Zufallszahlengenerator mit hoher Zufallsbitausgangsrate insbesondere für die Verschlüsselung umfasst.

Zufallszahlengeneratoren und vor allem Quanten-Zufallszahlengeneratoren bzw. QRNGs stellen häufig ein interessantes und lohnenswertes Ziel für Angriffe und Cyberangriffe dar. Sie müssen deshalb besonders resistent gegenüber Manipulationen von außen oder von Dritten sein. Hierbei geht es zum einen um die gezielte Beeinflussung der QRNGs und zum anderen um ein "Abhören" und eine Vorhersage der nächsten Zufallszahl.

Zur Erhöhung der Sicherheit werden Quantum-Zufallszahlengeneratoren (QRNG) vorgesehen, die in einem Halbleitersubstrat eine Entropiequelle, die eine Photonenquelle ist, und einen Detektor umfassen. Entropiequelle und Detektor sind senkrecht zueinander und zu einer Oberfläche des Hableitersubstrats angeordnet, was eine besonders hohe Zufallszahlendatenrate ermöglicht. Derartige Quantum-Zufallszahlengeneratoren mit vertikaler Anordnung im Halbleitersubstrat garantieren, dass die erzeugten Zufallszahlen tatsächlich zufällig, unvorhersehbar und von hoher Entropie sind. Unter "Entropie" wird dabei die in einer Zufallszahl vorhandene Unsicherheit oder Information bezeichnet und stellt den Grad der Unvorhersehbarkeit dar. Sie kann mittels einer vom National Institute of Standards and Technology (NIST) entwickelten Richtlinie NIST SP800-22 überprüft werden.

Quantum-Zufallszahlengeneratoren (QRNGs) sind bevorzugt monolithisch in dem Halbleitersubstrat aufgebaut und einstückig ausgeführt. Neben der Entropiequelle (Photonenquelle) und dem Detektor sind in dem Halbleitersubstrat weitere Elemente vorhanden. Diese können umfassen: einen oder mehrere analoge Verstärker und/oder Filterschaltkreise zu Aufbereitung des Ausgangssignals der Entropiequelle für eine anschließende Analog zu Digital-Wandlung; einen Ein- oder Mehr-Bit Analog-zu-Digital-Wandler (ADC), der im Falle eines Ein-Bit-Analog-zu-Digital-Wandlers ein Komparator sein kann; einen oder mehrere Zeit-zu-Digital-Wandler (TDC) und/oder einen oder mehrere Zeit-zu-Pseudozufallszahl-Wandler (TPRNC) zur Zuordnung einer eindeutigen binären Zahl zu einem Zeitabstand zweier Pulse der Entropiequelle; eine oder mehrere Entropie-Extraktionsvorrichtungen zur Extraktion eines oder mehrerer Zufallsbits aus diesen binären Zahlen; einen oder mehrere endliche Automaten (Finite-State-Machine) zur Wandlung des Datenstroms der Zufallsbits in Zufallszahlen; eine oder mehrere Schnittstellen für den Zugriff eines oder mehrerer externer Rechnersysteme auf diese Zufallszahlen und/oder zur Steuerung des Quanten-Zufallszahlengenerators; eine oder mehrere Komponenten oder Elemente zur Durchführung und/oder Unterstützung eines Health-Checks eines oder mehrerer der Elemente und/oder deren Zusammenwirkens; ein oder mehrere Elemente zur Erzeugung der internen Betriebsspannungen innerhalb des Quanten-Zufallszahlengenerators zum Betrieb der verschiedenen Elemente oder Komponenten des Quantum-Zufallszahlengenerators.

Derartige oder ähnliche Quantum-Zufallszahlengeneratoren (quantenbasierte Zufallszahlengeneratoren), die im Rahmen der Erfindung Anwendung finden können, sind beispielsweise aus DE 10 2023 126 168 A1 oder WO 2024/074170 A1 bekannt. Quantum-Zufallszahlengeneratoren zur Erzeugung von Zufallszahlen, die auf optischen Verfahren mit einer oder mehreren SPAD (Single Photon Avalanche Diode) als Detektor basieren, sind auch aus Francesco Ceccarelli, et.al.; "Recent Advances and Future Perspectives of Single-Photon Avalanche Diodes for Quantum Photonics Applications"; Adv. Quantum Technol. 2021, 4, 2000102 bekannt.

Dass eine Störung und Beeinflussung eines Quantum-Zufallszahlengenerators mittels externer Lichteinstrahlung möglich sind, sodass eine Manipulation oder Vorhersage der Zufallszahlen ermöglicht wird, wurde z. B. in Juan Carlos Garcia-Escartin, et.al.; "Attacking quantum key distribution by light injection via ventilation openings"; PLOS ONE | https://doi.org/10.1371/journal.pone.0236630; August 3, 2020 gezeigt.

Möglichkeiten, um solche Attacken zu erkennen, umfassen meist Start-Up-, Live- und sogenannte Total-Failure-Tests. Der Start-Up-Test prüft beim Einschalten des QRNG, ob alle Komponenten ordnungsgemäß funktionieren. Der Live-Test überprüft während der Operation bzw. des Betriebs des QRNG die Qualität der Zufallszahlen mittels statistischer Tests. Der Total-Failure Test erkennt einen Totalausfall der Entropiequelle oder des Detektors des QRNG. Derartige Tests sind in Werner Schindler, et.al.; "Evaluation Criteria for True (Physical) Random Number Generators Used in Cryptographic Applications"; B.S. Kaliski Jr. et al. (Eds.): CHES 2002, LNCS 2523, pp. 431-449, 2003 beschrieben.

Es besteht weiter ein großer Bedarf daran, die Sicherheit von Quantum-Zufallszahlengeneratoren, die eine Entropiequelle verwenden, zu verbessern und sie robust zu machen gegen externe Beeinflussungen, insbesondere gegen Störstrahlung oder optische Beeinflussung mittels Photonenstrahlung, und eine Vorhersage von Zufallszahlen zu verhindern.

Gelöst wird die Aufgabe durch einen Quantum-Zufallszahlengenerator mit den Merkmalen des Anspruchs 1, durch einen Grafikchip mit den Merkmalen des Anspruchs 17 und mit einem Verfahren mit den Merkmalen des Anspruchs 18.

In einem Aspekt betrifft die vorliegende Erfindung einen Quantum-Zufallszahlengenerator zur Erzeugung von Zufallszahlen umfassend wenigstens zwei Entropiequellen zum Erzeugen eines Events; wenigstens eine Auswerteeinheit zur Verarbeitung des Events; eine Ausgabeschnittstelle zum Ausgeben einer Binär-Zufallszahl, wobei die Entropiequelle eine Photonenquelle und einen Photonenempfänger umfasst; die Photonenquelle zufällig Photonen aussendet, die von dem Photonenempfänger erfasst und als Event an die Auswerteeinheit übermittelt werden. Die Auswerteeinheit ist dazu ausgebildet, die Events zu verarbeiten und binäre Zufallszahlen zu generieren, die mittels der Ausgabeschnittstelle ausgegeben werden.

In einem weiteren Aspekt betrifft die Erfindung einen Grafikchip mit einem derartigen Quantum-Zufallszahlengenerator.

Weitere Aspekte der Erfindung betreffen ein entsprechendes Verfahren und ein Computerprogrammprodukt mit Programmcode zum Durchführen der Schritte des Verfahrens, wenn der Programmcode auf einem Prozessor ausgeführt wird.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung in den abhängigen Ansprüchen beschriebenen Ausgestaltungen ausgeführt sein.

Erfindungsgemäß werden in dem Quantum-Zufallszahlengenerator zur Erzeugung von Zufallszahlen in zwei unabhängigen Entropiequellen Events hervorgerufen, die zum Generieren von Zufallszahlen geeignet sind. Nur durch eine Beeinflussung beider Entropiequellen kann auf die Erzeugung von Zufallszahlen Einfluss genommen werden. Um eine Manipulation zu erkennen, besteht die Möglichkeit, den Ausgang der Entropiequellen intern zu überwachen und miteinander zu vergleichen. Es kann vorgesehen sein, die Eventrate der einzelnen Entropiequellen zu detektieren. Die Eventrate muss in etwa einem vorgegebenen Erwartungsschema entsprechen. Liefert eine der beiden Entropiequellen beispielsweise über einen längeren Zeitraum keine Events, so ist eine äußere Beeinflussung anzunehmen. Eine Manipulation von außen ist ebenfalls sehr wahrscheinlich, wenn beide Entropiequellen vermehrt jeweils zeitgleich Events erzeugen. In diesem Fall ist es beispielsweise möglich, ein Warnsignal auszugeben.

In einer bevorzugten Ausführungsform ist der Quantum-Zufallszahlengenerator so ausgebildet, dass die Entropiequellen miteinander und mit der Auswerteeinheit interagieren. Die entstehende Wechselwirkung ist derart ausgebildet, dass jeweils nur eine Entropiequelle einen Event oder ein Eventsignal an die Auswerteeinheit übermittelt. Es entsteht also eine Interdependenz zwischen den Entropiequellen und der Auswerteeinheit. Unter dem Begriff Interdependenz wird eine wechselseitige Abhängigkeit zwischen den jeweiligen Elementen verstanden.

Um die Wechselwirkung zu realisieren, ist in einer bevorzugten Ausführungsform zwischen den Entropiequellen und der Auswerteeinheit ein Kopplungselement geschaltet. Dieses Kopplungselement kann beispielsweise ein ODER-Glied oder ein Multiplexer sein. Andere logische Gatter sind ebenfalls möglich, solange sie es erlauben, zwischen den wenigstens zwei Entropiequellen hin und her zu schalten und eine Auswahl zu treffen, sodass nur das Eventsignal einer der Entropiequellen zu der Auswerteeinheit geleitet wird.

Eine bevorzugte Ausführungsform des Quanten-Zufallszahlengenerators sieht vor, dass zwischen der Auswerteeinheit und der Ausgabeschnittstelle ein Zwischenspeicher vorgesehen ist, um die Binär-Zufallszahlen zwischenzuspeichern und verzögert an die Ausgabeschnittstelle weiterzuleiten. Bei einer direkten Ausgabe der Zufallszahlen von der Auswerteeinheit an die Ausgabeschnittstelle kann beispielsweise ein Stromimpuls oder eine andere Erhöhung der Energie innerhalb des Quanten-Zufallszahlengenerators erzeugt werden, der von außen detektierbar sein kann. Auf diese Weise ließe sich eine direkte Korrelation zwischen der Binär-Zufallszahl bzw. ihrem Wert oder ihrer Kategorie und dem jeweiligen Impuls des Generators rückschließen. Durch die verzögerte Ausgabe mittels des Zwischenspeichers wird ein derartiger Rückschluss unterbunden oder jedenfalls deutlich erschwert.

Besonders bevorzugt erfolgt eine gesteuerte Verzögerung mittels des Zwischenspeichers. Die Steuerung kann sich dabei beispielsweise auf die Verzögerungszeit beziehen, die variiert werden kann. Bevorzugt erfolgt die Steuerung der Verzögerung oder der Verzögerungszeit durch die Entropiequelle. Beispielsweise ist es denkbar, dass bei einem neu erzeugten Event der Entropiequelle eine Ausgabe der nächsten aktuellen Zufallszahl aus dem Zwischenspeicher nach einer vorgegebenen Zeitspanne erfolgt. Es ist auch denkbar, dass die Steuerung mittels der Auswerteeinheit realisiert ist. In Abhängigkeit der aktuell erzeugten Zufallszahl können zwischengespeicherte Zufallszahlen ausgegeben oder das Zeitintervall oder die Verzögerungszeit variiert werden. Dabei können unterschiedliche Verzögerungszeiten beispielsweise in einem Speicher oder einer Tabelle abgelegt sein, die in Abhängigkeit der aktuellen (Steuer) Zufallszahl ausgewählt werden können. Da ein derartiges Auswahlkriterium von außen nicht ersichtlich ist, wird der Rückschluss auf die als nächstes ausgegebene Zufallszahl deutlich erschwert oder unmöglich gemacht.

In einer bevorzugten Ausführungsform sind neben den wenigstens zwei Entropiequellen mehrere Auswerteeinheiten vorgesehen. Jede der Entropiequellen ist mit einer Auswerteeinheit verlinkt oder verknüpft. Hierbei findet bevorzugt eine 1 :1-Verknüpfung statt. Je eine Entropiequelle wird mit einer Auswerteeinheit verknüpft, sodass ihr Eventsignal von der Auswerteeinheit ausgewertet werden kann und eine entsprechende Zufallszahl erzeugt wird. Somit stehen in dem Quanten-Zufallszahlengenerator mehrere Zufallszahlen zur Verfügung.

Zwischen der Ausgabeschnittstelle und den einzelnen Auswerteeinheiten ist deshalb eine Auswahleinheit vorgesehen, sodass eine Auswerteeinheit ausgewählt werden und mit der Ausgabeschnittstelle verknüpft werden kann, um deren erzeugte Zufallszahl an der Ausgabeschnittstelle auszugeben.

Besonders bevorzugt ist die Anzahl der Entropiequellen gleich der Anzahl der Auswerteeinheiten. Je eine Entropiequelle und eine Auswerteeinheit bilden einen Verarbeitungskanal, sodass der Quantum-Zufallszahlengenerator mehrere Verarbeitungskanäle aufweist. Die Verarbeitungskanäle sind mit der Auswahleinheit derart verbunden, dass die von einem der Verarbeitungskanäle erzeugte Zufallszahl an der Ausgabeschnittstelle ausgegeben werden kann.

Die einzelnen Verarbeitungskanäle sind bevorzugt parallel geschaltet, wobei sich die Bauelemente der Verarbeitungskanäle, also die Entropiequellen und die Auswerteeinheiten nicht gegenseitig beeinflussen. Es findet beispielsweise kein Crosstalk zwischen den einzelnen Verarbeitungskanälen statt.

In einer bevorzugten Ausführungsform umfasst ein Verarbeitungskanal neben einer Entropiequelle und einer Auswerteeinheit auch einen Zwischenspeicher, in dem die von der Auswerteeinheit erzeugten Binär-Zufallszahlen zwischengespeichert werden können.

In einer bevorzugten Ausführungsform, in der der Quantum-Zufallszahlengenerator mehrere Verarbeitungskanäle aufweist, ist die Auswahleinheit dazu ausgebildet, eine variierende Verbindung zwischen einer der Auswerteeinheiten und der Ausgabeschnittstelle herzustellen. Dies gilt auch, wenn lediglich mehrere Auswerteeinheiten vorgesehen sind, jedoch nicht mehrere Verarbeitungskanäle gebildet werden.

Die Verbindung zwischen den Auswerteeinheiten und der Ausgabeschnittstelle mittels der Auswahleinheit kann dynamisch variiert werden. Die Variation der Verbindung kann auch gesteuert sein, beispielsweise durch eine separate Steuereinheit, die in dem Quantum-Zufallszahlengenerator integriert sein kann. Es ist ebenso möglich, eine zufällige Variation der Verbindung zwischen Auswerteeinheit und Ausgabeschnittstelle durch die Auswahleinheit zu ermöglichen. Die Zufälligkeit kann beispielsweise mittels einer Pseudozufallszahl hervorgerufen und festgelegt sein. Beispielsweise ist es denkbar, dass die Variation, die die Auswahleinheit ausführt, auf einer verzögerten oder nachfolgenden Zufallszahl basiert, die von der Auswerteeinheit oder einer der Auswerteeinheiten erzeugt wird. Auch die Wahl der Auswerteeinheiten kann variiert werden.

In einer bevorzugten Ausführungsform ist die Auswahleinheit ein Multiplexer. Sie kann auch einen Addierer, ein XOR-Gatter oder ein anderes logisches Gatter umfassen. Die entsprechende Ausgestaltung der Auswahleinheit obliegt dem Fachmann und ist für ihn bekannt.

Eine bevorzugte Ausführungsform des Quantum-Zufallszahlengenerators umfasst eine Überwachungseinheit. Die Überwachungseinheit ist dazu ausgebildet, um eine Manipulation von außen zu erkennen. Sie ist ferner dazu ausgebildet, um die Ausgänge der Entropiequellen und/oder die Ausgänge der Auswerteeinheiten und/oder die Ausgänge der Zwischenspeicher zu überwachen. Hierbei können bevorzugt jeweils die Ausgänge der gleichen Bauteile von parallel geschalteten Bauteilen überwacht und überprüft werden. Vorzugsweise wird dabei überprüft, ob die Ausgangswerte der gleichen Bauteile gleich oder identisch sind. Ist dies der Fall, kann bevorzugt eine Ausgabe einer Binär-Zufallszahl an der Ausgabeschnittstelle unterbunden und verhindert werden. Beispielsweise könnte die entsprechende Binär-Zufallszahl gelöscht werden. Zusätzlich oder alternativ ist es möglich, eine Warnung auszugeben, beispielsweise in Form eines Warnsignals. Das Warnsignal kann anstelle des Verhinderns der Ausgabe treten.

In einer bevorzugten Ausführungsform ist die Überwachungseinheit des Quantum-Zufallszahlengenerators dazu ausgebildet, um eine Manipulation von au-βen zu erkennen. Vorzugsweise ist die Überwachungseinheit dazu eingerichtet, die Anzahl oder die Häufigkeit der am Ausgang der Auswerteeinheit und/oder des Zwischenspeichers ausgegebenen Kategorien von Binär-Zufallszahlen zu ermitteln. Bevorzugt wird eine Manipulation dann erkannt, wenn die Anzahl der Binär-Zufallszahlen einer Kategorie um einen vorgegebenen Schwellwert größer ist als die Anzahl der Binär-Zufallszahlen der anderen Kategorie. Der Schwellwert kann auch Null sein, so dass die Anzahl in den jeweiligen Kategorien verglichen werden.

Das Erkennen einer Manipulation kann bevorzugt dann erfolgen, wenn die Anzahl an aufeinanderfolgenden Binär-Zufallszahlen der gleichen Kategorie am Ausgang der Auswerteeinheit und/oder am Ausgang des Zwischenspeichers eine vordefinierte Grenzanzahl überschreitet. Eine Gleichverteilung der Zufallszahlen ist in beiden Fällen nicht mehr gegeben.

Die Kategorie der Binär-Zufallszahl ist hierbei ihr Wert. Mit anderen Worten umfasst die Kategorie die Werte 0 und 1, sodass die Zufallszahl entweder 0 oder 1 sein kann. Es wird also geprüft, ob mehr 1 oder mehr 0 ausgegeben werden und keine über einen längeren Zeitraum definierte Gleichverteilung der Binär-Zufallszahlen vorherrscht.

Bevorzugt wird überwacht, ob mehr Binär-Zufallszahlen einer Kategorie ausgegeben werden als ein vorgegebener Schwellwert, der eine akzeptable Grenze darstellt. Auch bei einer Gleichverteilung der Binär-Zufallszahlen und ihrer Werte kann über einen definierten Zeitraum eine größere Häufigkeit einer der Kategorien auftreten, sodass in diesem Zeitraum mehr 1 als 0 oder umgekehrt erzeugt werden. Dies kann durchaus akzeptabel sein, solange insgesamt ein Schwellwert nicht überschritten wird, also eine Gleichverteilung der Binär-Zufallszahlen vorliegt.

In einer bevorzugten Ausführungsform ist es möglich, eine Reihe von aufeinander folgenden Binär-Zufallszahlen derselben Kategorie zu löschen, deren Häufigkeit nicht ein vorgegebenes Kriterium erreicht, beispielsweise wenn zu viele Zufallszahlen derselben Kategorie aufeinander folgen. Zusätzlich kann bevorzugt die Anzahl der gelöschten Reihen von Zufallszahlen überwacht werden. Hieraus lässt sich auf einen möglichen Angriff oder eine versuchte Manipulation rückschließen.

Bevorzugt kann die Anzahl der gelöschten Reihen von Zufallszahlen ins Verhältnis gesetzt werden mit der Anzahl der nicht gelöschten Reihen an Zufallszahlen. Eine Reihe von Zufallszahlen ist dabei eine vorgegebene Anzahl von Zahlen. Wenn dieses Verhältnis über einem vorgegebenen Wert liegt, kann ebenfalls eine mögliche Manipulation erkannt werden. Entsprechend kann ein Warnsignal ausgegeben oder die Ausgabe einer Zufallszahl an der Ausgabeschnittstelle verhindert werden.

In einer bevorzugten Ausführungsform ist die Überwachungseinheit dazu eingerichtet, die Anzahl von Binär-Zufallszahlen der gleichen Kategorie in wenigstens zwei der Verarbeitungskanäle zu ermitteln. Hierbei wird also die Anzahl der Zufallszahlen gezählt, die in zwei Verarbeitungskanälen gleichzeitig generiert werden und gleich sind. Prinzipiell können bevorzugt diese Binär-Zufallszahlen gelöscht werden.

Vorzugsweise wird auch die Anzahl der Binär-Zufallszahlen verschiedener Kategorie in zwei Verarbeitungskanälen gezählt und mit denen gleicher Kategorie verglichen. Die Überwachungseinheit erkennt eine Manipulation, wenn die Anzahl von Binär-Zufallszahlen gleicher Kategorie größer ist als die Anzahl ungleicher Kategorie oder wenn die Anzahl von Binär-Zufallszahlen gleicher Kategorie um einen Grenzwert oder Schwellwert über der Anzahl von Binär-Zufallszahlen unterschiedlicher Kategorie liegt.

Möglich ist es auch, dass die Binär-Zufallszahlen gleicher Kategorie in zwei Verarbeitungskanälen verworfen werden, also gelöscht werden, und alternativ oder zusätzlich ein Warnsignal ausgegeben wird.

In einer bevorzugten Ausführungsform eines Quantum-Zufallszahlengenerators sind mehrere Verarbeitungskanäle vorgesehen, wobei die Verarbeitungskanäle und deren Bauteile den gleichen Umgebungsbedingungen ausgesetzt sind. Mit anderen Worten: die Verarbeitungskanäle werden bei einer Manipulation von außen in gleicher Weise beeinflusst. Eine Beeinflussung zwischen den einzelnen Verarbeitungskanälen untereinander, beispielsweise durch Crosstalk, ist durch das Design des Quantum-Zufallszahlengenerators auszuschließen.

Unter den gleichen Umgebungsbedingungen wird beispielsweise verstanden, dass die gleiche Betriebsspannung für alle Bauteile des Quantum-Zufallszahlengenerators vorherrscht, die Bauteile von der gleichen Energiequelle oder Stromquelle versorgt werden. Auch von außen eingeprägte Lichteinflüsse oder mechanische Beanspruchungen werden durch das entsprechende Design auf alle Bauteile appliziert. Änderungen der Umgebungstemperatur oder der Bauteiltemperatur innerhalb des Quantum-Zufallszahlengenerators, die von außen bewirkt werden, wirken vorzugsweise auf alle Bauelemente gleich. Hierdurch ist es einfacher, auf eine Manipulation zu schließen, weil alle Bauelemente und/oder Verarbeitungskanäle in gleicher Weise betroffen sind.

In einer bevorzugten Ausführungsform, in der der Quantum-Zufallszahlengenerator beispielsweise mehrere Verarbeitungskanäle aufweist, sind die Bauteile so miteinander verschaltet, dass sich eine Matrixanordnung oder Matrixstruktur bildet. Eine Entropiequelle eines Verarbeitungskanals ist in diesem Fall mit einer Auswerteeinheit eines anderen Verarbeitungskanals verbunden. Zusätzlich oder alternativ kann eine Auswerteeinheit eines Verarbeitungskanals mit einem Zwischenspeicher eines anderen Verarbeitungskanals verbunden sein. Die entsprechende Verbindung oder Verlinkung der einzelnen Bauteile der jeweiligen Verarbeitungskanäle kann beispielsweise durch Verbindungsbausteine oder Verbindungselemente erzeugt werden. Die Verbindungen können statisch oder variabel sein. Sie können gesteuert sein, beispielsweise von einer externen Steuerquelle oder von einer in dem Quantum-Zufallszahlengenerator vorhandenen Steuerquelle. Alternativ kann die Verbindung oder die Steuerung der einzelnen Verbindungselemente auf den erzeugten Zufallszahlen oder auf vorher erzeugten Zufallszahlen beruhen. Die Verbindungselemente können beispielsweise ein Multiplexer sein.

In einer bevorzugten Ausführungsform des Quantum-Zufallszahlengenerators ist die Auswerteeinheit derart ausgebildet, dass sie ein erstes Zeitintervall zwischen zwei Events und der Entropiequelle bestimmt und ein zweites Intervall zwischen zwei späteren Events bestimmt. In Abhängigkeit der Länge der Zeitintervalle wird in der Auswerteeinheit eine Zufallszahl einer Kategorie erzeugt, also eine 0 oder eine 1. In einer bevorzugten Ausführungsform erfolgt die Zuordnung zu einer der Kategorien nach festgelegten Zeitintervalllängen. Besonders bevorzugt ist eine Ausführungsform, in der die Zuordnung der Kategorie zu den Zeitintervalllängen variiert werden kann. Die Variation kann nach einem vorgegebenen Muster oder gesteuert oder ebenfalls zufällig erfolgen.

In einer bevorzugten Ausführungsform umfasst der Quantum-Zufallszahlengenerator eine Prüfeinheit, die ein Fehlersignal in einem oder in mehreren Verarbeitungskanälen erzeugt und so einen Selbsttest der Überwachungseinheit initiiert. Auf diese Weise ist es möglich, die Überwachungseinheit oder eine andere "Attack Detection"-Einheit selbsttestfähig zu machen. Die Überwachungseinheit kann sich somit mit Hilfe der Prüfeinheit selbst überprüfen. Beispielsweise können in allen Verarbeitungskanälen gleiche Bits (Fehler-Bits) eingespeist werden. Es wird dann überprüft, ob dieser bewusst eingespeiste Fehler durch die Überwachungseinheit detektiert wird.

In einer bevorzugten Ausführungsform ist die Überwachungseinheit dazu ausgebildet, Kreuzkorrelationsintegrale der Zufallsbitströme (beispielsweise Reihen von Binär-Zufallszahlen) in den verschiedenen Verarbeitungskanälen zu berechnen. Auf diese Weise kann überprüft werden, ob die Verarbeitungskanäle Korrelationen zeigen, die höher sind als ein vorgegebener Grenzwert, also höher als erlaubt.

Die zu lösende Aufgabe, eine Manipulation eines Quantum-Zufallszahlengenerators durch externe Einflüsse zu verhindern, wird auch mittels des erfinderischen Verfahrens erzielt. Das Verfahren setzt dabei einen Quantum-Zufallszahlengenerator mit wenigstens zwei Verarbeitungskanälen voraus, wobei jeder der Verarbeitungskanäle je eine Entropiequelle und wenigstens eine Auswerteeinheit umfasst. Das Verfahren umfasst mehrere Schritte.

In einem ersten Schritt erfolgt das Zwischenspeichern der von der Auswerteeinheit generierten Zufallszahlen in einem Buffer.

In einem weiteren Schritt wird die Verteilung der Zufallszahlen im Buffer ermittelt. Der Buffer kann ein externer oder ein in dem Zufallszahlengenerator integrierter Speicher sein. Zusätzlich oder alternativ kann die Verteilung der Zufallszahlen in dem Zwischenspeicher eines Verarbeitungskanals und/oder an den Ausgängen der Auswerteeinheit oder an den Ausgängen der Zwischenspeicher eines Verarbeitungskanals ermittelt werden.

In einem weiteren Schritt wird erfindungsgemäß ein Abbruchsignal und/oder ein Warnsignal erzeugt, wenn beim Ermitteln der Verteilung eine Ungleichverteilung ermittelt wird. Hierbei wird die Verteilung der Zufallszahlen über eine vorgegebene Zeitspanne überwacht und beurteilt.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: einen erfindungsgemäßen Quantum-Zufallszahlengenerator;
- Figur 2: eine bevorzugte Ausführungsform eines Quantum-Zufallszahlengenerators;
- Figur 3: zwei Wahrscheinlichkeitsschemen mit und ohne Beeinflussung;
- Figur 4: eine weitere bevorzugte Ausführungsform eines Quantum-Zufallszahlengenerators;
- Figur 5: eine Darstellung einer Einflussnahme von außen auf den Zufallszahlengenerator;
- Figur 6: einen Grafikchip; und
- Figur 7: eine schematische Darstellung des Ablaufs des erfindungsgemäßen Verfahrens.

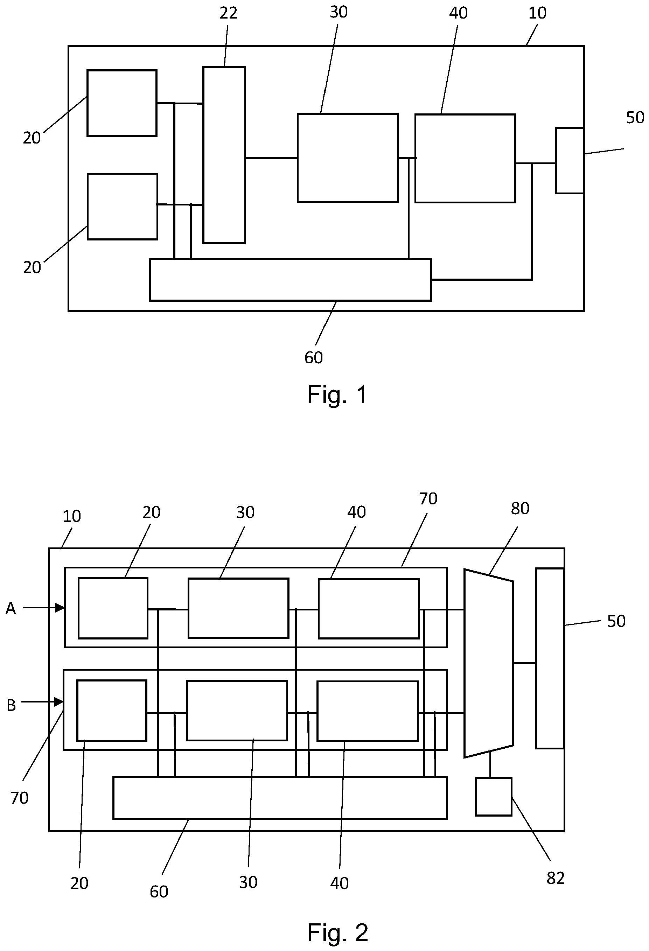

Figur 1 zeigt eine schematische Darstellung eines Quantum-Zufallszahlengenerators 10, auch Quantum Random Number Generator, QRNG, genannt Der Quantum-Zufallszahlengenerator 10 hat zwei Entropiequellen 20, die mit einer Auswerteeinheit 30 in Wechselwirkung stehen. Die Entropiequellen 20 umfassen jeweils eine Photonenquelle, die beispielsweise eine Zener-Diode sein kann, und eine Empfangsdiode, die bevorzugt eine SPAD, Single Photon Avalanche Diode, ist. Die SPAD, detektiert die zufällig von der Zener-Diode erzeugten Photonen und gibt ein Event oder ein Event-Signal an dem Ausgang der Entropiequelle 20 aus. Dieses Event-Signal kann beispielsweise eine Stromspitze oder eine steigende Flanke eines Stromimpulses sein.

Die Auswerteeinheit 30 wertet die Event-Signale der Entropiequelle 20 und die Zeiten, zu denen sie entstehen, aus. Dabei wird bevorzugt die Zeit zwischen zwei Events ermittelt und in einem weiteren Schritt die Zeit zwischen zwei weiteren Events. Aus den einzelnen Zwischen-Event-Zeiten oder Inter-Event-Zeiten oder Zwischenereignis-Zeiten und dem Verhältnis zwischen ihnen wird festgelegt, ob am Ausgang der Auswerteeinheit 30 eine logische 0 oder eine logische 1 ausgegeben wird. Die Auswerteeinheit 30 erzeugt also Binär-Zufallszahlen in zwei Kategorien, nämlich als Wert 0 und als Wert 1. Diese stehen an dem Ausgang zur Verfügung.

In der hier gezeigten Ausführungsform sind die beiden Entropiequellen 20 über ein Koppelungselement 22 mit der Auswerteeinheit 30 verbunden. Im einfachsten Fall kann das Koppelungselement 22 ein OR-Gatter sein, sodass die Event-Signale einer der beiden Entropiequellen 20 an die Auswerteeinheit 30 übermittelt werden. Alternativ kann das Koppelungselement 22 ein Multiplexer oder ein anderes logisches Gatter sein.

Die Ausführungsform mit wenigstens zwei Entropiequellen 20 bietet die Möglichkeit, dass sie auf einer kleinen Fläche, insbesondere bei Ausbildung des Koppelungselements 22 als OR-Gatter, realisiert werden können. Eine derartige Ausführungsform weist einen geringen Stromverbrauch auf, da die zweite Entropiequelle 20 lediglich ein Stand-by-Backup ist. Bei einem Parallelbetrieb, beispielsweise mittels eines Multiplexers als Koppelungselement 22, ist eine volle Redundanz gegeben. Eine derartige Ausführungsform bietet den Vorteil, dass eine verbesserte Leistung im Normalbetrieb vorherrscht. Darüber hinaus zeigt eine derartige Ausführungsform eine hohe Robustheit gegen zufällige Hardwareausfälle.

Am Ausgang der Auswerteeinheit 30 ist ein Zwischenspeicher 40 vorgesehen, in dem die Binär-Zufallszahlen für eine vorgegebene Zeit zwischengespeichert werden, bevor sie an einer Ausgabeschnittstelle 50 verzögert ausgegeben werden. Dies bietet den Vorteil, dass kein direkter Rückschluss zwischen der erzeugten Binär-Zufallszahl am Ausgang der Auswerteeinheit 30 und der ausgegebenen Binär-Zufallszahl möglich ist.

Die Ausgänge der Auswerteeinheit 30 und des Zwischenspeichers 40, wie auch die Ausgänge der beiden Entropiequellen 20, werden mit einer Überwachungseinheit 60 überwacht. Die Überwachungseinheit 60 bietet die Möglichkeit, Manipulationsversuche von außen zu erkennen. Diese können beispielsweise durch Einstrahlung von Licht oder anderen elektromagnetischen Wellen oder durch Temperatureinflüsse hervorgerufen werden. Auch eine Beeinflussung der Energieversorgung, wie beispielsweise Änderung des Stroms oder der Spannung von außen, sind möglich.

Beispielsweise kann die Überwachungseinheit 60 dazu ausgebildet sein, die Ausgänge der beiden Entropiequellen 20 miteinander zu vergleichen und hier festzustellen, falls eine Häufung von Events oder eine Änderung der Eventrate erfolgt.

Figur 2 zeigt eine bevorzugte Ausführungsform des Quantum-Zufallszahlengenerators 10, in der zwei parallel geschaltete Verarbeitungskanäle 70 implementiert sind. Jeder Verarbeitungskanal 70 umfasst eine Entropiequelle 20, eine mit dieser Entropiequelle 20 gekoppelte Auswerteeinheit 30 und einen Zwischenspeicher 40. Die Ausgänge der jeweiligen Entropiequellen 20, Auswerteeinheiten 30 und Zwischenspeicher 40 werden in einer Überwachungseinheit 60 gemonitort. Am Ende der Verarbeitungskanäle 70 wird eines der Signale mittels einer Auswahleinheit 80 ausgewählt und an die Ausgabeschnittstelle 50 geleitet. Die Auswahleinheit 80, die bevorzugt ein Multiplexer ist, kann über eine Steuereinheit 82 gesteuert werden.

Die wenigstens zwei Verarbeitungskanäle 70 sind so implementiert, dass sie bevorzugt vollkommen unkorreliert sind und ohne Crosstalk arbeiten. Für eine möglichst gute Abschirmung nach außen kann beispielsweise ein Gehäuse des Quantum-Zufallszahlengenerators 10 sorgen. Gleichzeitig sind die beiden Verarbeitungskanäle 70 derart benachbart, dass sie unter möglichst gleichen Umgebungsbedingungen arbeiten. Sie werden beide mit der gleichen Versorgungsspannung betrieben und würden bei einer Beeinflussung von außen mit den gleichen Störsignalen beaufschlagt werden. Auch geänderte Temperatur- oder Lichteinflüsse von außen wirken auf beide Verarbeitungskanäle 70 gleich.

Im Normalbetrieb sind die Ausgaben der beiden Verarbeitungskanäle 70 unkorreliert. Die Wahrscheinlichkeit, dass in der Ausgabe der beiden Pfade die gleichen Zustände oder Kategorien von Zufallszahlen erreicht werden, ergibt sich aus dem Produkt der Wahrscheinlichkeiten. Dass beide Verarbeitungskanäle 70 eine logische 1 erzeugen, ergibt sich aus der Wahrscheinlichkeit des ersten Verarbeitungskanals 70, (A), multipliziert mit der Wahrscheinlichkeit der Ausgabe einer logischen 1 des zweiten Verarbeitungskanals 70, (B). Gleiches gilt für die Ausgabe von zwei logischen Nullen als Kategorie der Binär-Zufallszahlen an den beiden Verarbeitungskanälen 70.
Ausgabe (1, 1) = P_{A}(1) * P_{B}(1)
Ausgabe (0, 0) = P_{A}(0) * P_{B}(0)

Im Falle einer Manipulation der Umgebungsbedingungen oder von außen verändert ein Angreifer die Wahrscheinlichkeit für eine logische 1 oder eine logische 0. Die Manipulation betrifft aber beide Verarbeitungskanäle 70 gleich, sodass die Wahrscheinlichkeit auf gleiche Ausgaben steigt.

Die Überwachungseinheit 60 kann die Häufigkeit von gleichen Ausgaben, also von Binär-Zufallszahlen in der gleichen Kategorie, in beiden Verarbeitungskanälen 70 überwachen. Ist diese statistisch signifikant über der erwarteten Häufigkeit, wird eine Warnung ausgegeben. Optional können parallel oder alternativ auch die Ausgabe der Binär-Zufallszahlen der gleichen Kategorie verworfen werden und nur ungleiche Binär-Zufallszahlen ausgegeben werden. Die Überwachung kann, wie in Figur 2 gezeigt, ebenfalls an mehreren Stellen der Verarbeitung mit unterschiedlicher Samplegröße und unterschiedlichen Limits an verschiedenen Stellen der Verarbeitungskanäle 70 parallel erfolgen, um eine diagnostische Abdeckung weiter zu verbessern und Rückschlüsse auf die Art einer Manipulation oder eines Angriffs zu erlauben. Wie Figur 2 zeigt, werden hierzu die Ausgänge der Entropiequellen 20, der Auswerteeinheiten 30 und der Zwischenspeicher 40 überwacht.

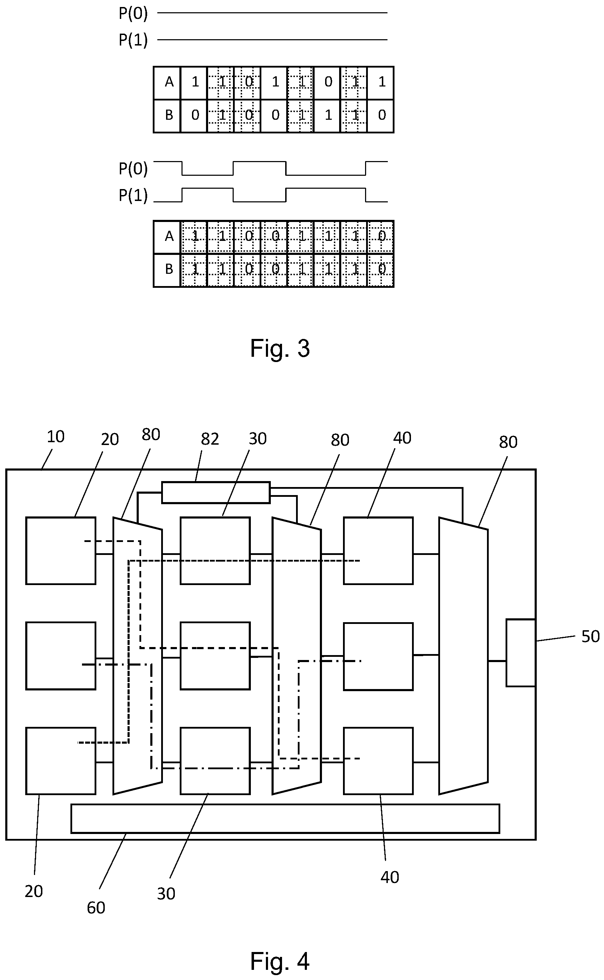

Figur 3 zeigt die Ausgabe der beiden Verarbeitungskanäle 70 als A und B und die Wahrscheinlichkeiten, dass die Binär-Zufallszahl eine 1 oder eine 0 ist. Diese Wahrscheinlichkeiten sind im Normalbetrieb gleich verteilt, sodass sich als Ausgabe an den jeweiligen Verarbeitungskanälen 70 beispielsweise die in Figur 3 gezeigte Folge von Binär-Zufallszahlen ergibt. Hierbei ist ersichtlich, dass es eine Gleichverteilung der Zufallszahlen in dem jeweiligen Verarbeitungskanal 70, aber auch eine Gleichverteilung der Verschiedenheit bzw. Gleichheit der Binär-Zufallszahlen zwischen den jeweiligen Kanälen A, B gibt.

Im unteren Teil von Figur 3 ist dargestellt, wie die Wahrscheinlichkeit, dass eine logische 0 oder eine logische 1 am Ende der jeweiligen Verarbeitungskanäle 70 ausgegeben wird, von außen manipuliert wird. Damit ergibt sich die untere Reihenfolge von Binär-Zufallszahlen für die Kanäle A und B, wobei hier jeweils gleiche Binär-Zufallszahlen bzw. Binär-Zufallszahlen der gleichen Kategorie ausgegeben werden.

In den bisherigen Figuren 1 und 2 wurden jeweils zwei Entropiequellen 20 bzw. zwei Verarbeitungskanäle 70 vorgesehen. Selbstverständlich können auch mehr Verarbeitungskanäle 70 oder mehrere Entropiequellen 20 vorgesehen sein.

Figur 4 zeigt eine Ausführungsform mit im Wesentlichen drei Verarbeitungskanälen 70, die jedoch nicht explizit eingezeichnet sind. Vielmehr sind die Entropiequellen 20, die Auswerteeinheiten 30 und die Zwischenspeicher 40 in Form einer Matrix angeordnet. Hierbei bilden die jeweiligen Elemente Entropiequelle 20, Auswerteeinheit 30 und Zwischenspeicher 40 jeweils eine Spalte, während die Verarbeitungskanäle 70 eine Zeile der Matrix darstellen. Zwischen den einzelnen Spalten, also zwischen den Entropiequellen 20 und den Auswerteeinheiten 30 sowie zwischen den Auswerteeinheiten 30 und den Zwischenspeichern 40 ist jeweils eine Auswahleinheit 80 angeordnet, die von einer Steuereinheit 82 gesteuert werden kann. Vorzugsweise sind die Auswahleinheiten 80 Multiplexer, die es ermöglichen, die Entropiequelle 20 der ersten Reihe mit der Auswerteeinheit 30 der zweiten Reihe und diese mit dem Zwischenspeicher 40 der dritten Reihe zu verknüpfen. Diese Verknüpfungen sind mit unterschiedlich gestrichelten Linien dargestellt.

Welche Verknüpfung vorliegt, kann zum einen durch die Steuereinheit 82 gesteuert sein. Die Verknüpfung und Verschaltung der einzelnen Elemente des Quantum-Zufallszahlengenerators 10 erfolgt also dynamisch, variabel oder zufällig. Hierzu kann beispielsweise auch eine in einer der Auswerteeinheiten 30 erzeugte Zufallszahl verwendet werden. Am Ende der jeweiligen Reihen sind die Zwischenspeicher 40 mit einer weiteren Auswahleinheit 80 verbunden, mittels der eine der in den Zwischenspeichern 40 zur Verfügung gestellten Binär-Zufallszahlen ausgewählt wird. Diese wird dann über die Ausgabeschnittstelle 50 aus dem Zufallszahlengenerator ausgegeben.

Die Überwachungseinheit 60 überwacht jeweils die Ausgänge der einzelnen Entropiequellen 20, Auswerteeinheiten 30 und Zwischenspeicher 40.

Die Vorhersagbarkeit der Zufallszahlen (Binär-Zufallszahlen) in der Ausgabe durch Beobachtung der Ausgänge der Entropiequellen 20 und/oder Auswerteeinheiten 30 und/oder Zwischenspeicher 40 oder Ausgangsschnittstelle 50 wird erschwert, da die Zuweisung oder Verknüpfung der einzelnen Elemente dynamisch erfolgt.

Wird also beispielsweise von außen eine Stromspitze bei einem Event einer Entropiequelle 20 beobachtet, so lässt sich bei nur einem Verarbeitungskanal 70 (Figur1) einfach darauf rückschließen, wie lange die Zeiten zwischen den einzelnen Events sind. Durch Korrelation kann dann beobachtet werden, wann eine logische 0 und wann eine logische 1 ausgegeben wird. Werden jedoch, wie in Figur 2 oder 4, mehrere redundante Pfade verwendet, kann nicht unterschieden werden, zu welchem Verarbeitungskanal 70 die Stromspitze einer Entropiequelle 20 gehört, da sie sich eine gemeinsame Energiequelle oder Spannungsquelle teilen. Da auch nicht erkennbar ist, welche Ausgabe an welchem Verarbeitungskanal 70 erfolgt bzw. aus welchem Zwischenspeicher 40 hervorgebracht wird, kann auch keine Voraussage der an der Ausgabeschnittstelle 50 ausgegebenen Binär-Zufallszahl gemacht werden.

Durch die Ausführung mit mehreren Verarbeitungskanälen 70 oder mit der Matrix-Anordnung gemäß Figur 4 kann also eine verbesserte Geheimhaltung der internen Zustände erfolgen. Darüber hinaus ist die jeweilige Überwachungseinheit 60 dazu ausgebildet, Manipulationsversuche zu erkennen, indem die Ausgänge der jeweiligen Bauteile überprüft und miteinander verglichen werden.

Wie in den Figuren 2 und 4 gezeigt, teilen sich verschiedene Entropiequellen 20 die Umweltbedingungen, insbesondere die Versorgungsspannung. Ziele dieser Konstruktion sind unter anderem, dass die Entropiequellen 20 unkorreliert sind und identische Umgebungsbedingungen für alle Entropiequellen vorliegen. Die Überwachungseinheit 60 prüft eine mögliche Korrelation zwischen den einzelnen Entropiequellen 20.

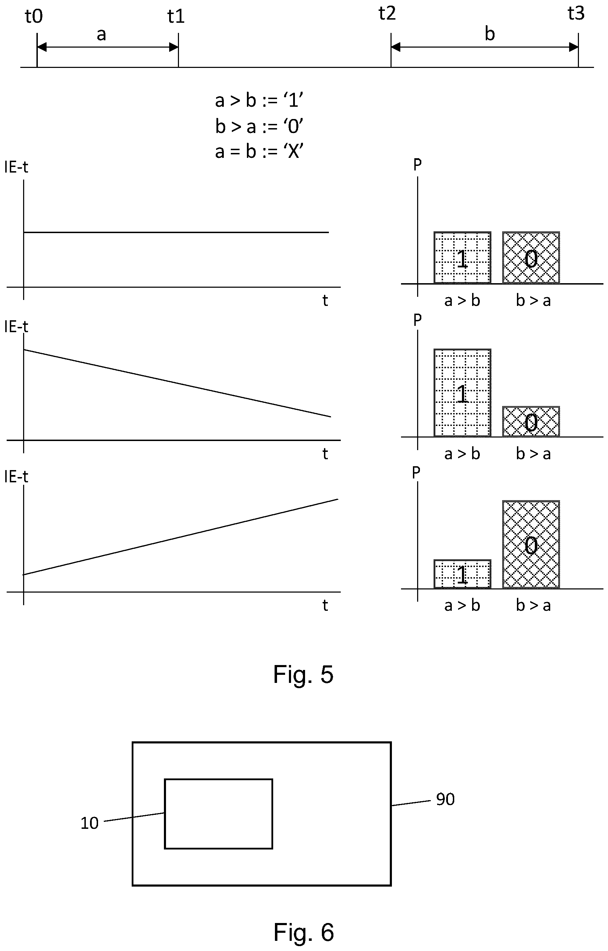

Figur 5 zeigt einen Zeitstrahl am Ausgang der Entropiequellen 20. Bei einer Zeit t0 wird ein erster Event detektiert, bei einer Zeit t1 ein zweiter Event. Die dazwischenliegende Zeitspanne ist die Inter-Event-Zeit a. Die Zeiten der beiden nachfolgenden Events t2, t3 werden ebenfalls ermittelt und daraus die Inter-Event-Zeit b festgelegt. In der Auswerteeinheit 30 werden die einzelnen Zeiten ausgewertet und eine logische 1 dann ausgegeben, wenn die Inter-Event-Zeit a größer als die Inter-Event-Zeit b ist. Ist die Inter-Event-Zeit b größer als a, wird eine logische 0 ausgegeben. Sind beide Zeiten gleich, erfolgt keine Ausgabe.

Betrachtet man die Inter-Event-Zeit IE-t über einen längeren Zeitraum, so ist sie im Normalbetrieb konstant. Damit ist auch die Wahrscheinlichkeit, dass die Kategorie 1, also eine logische 1, oder die Kategorie 0, also eine logische 0, ausgegeben wird, gleich.

Bei einer Beeinflussung von außen, also bei einer externen Störung, bei der beispielsweise der Quantum-Zufallszahlengenerator 10 abgekühlt wird, wird der Generator insgesamt schneller, die Inter-Event-Zeit sinkt. Dies hat zur Folge, dass deutlich mehr logische 1 als logische 0 ausgegeben werden.

Wird beispielsweise die Spannung erhöht, erwärmt sich der Generator und die Verarbeitung wird insgesamt langsamer. Dies hat zur Folge, dass die Inter-Event-Zeit steigt. Hieraus folgt, dass die Wahrscheinlichkeit für eine 1 deutlich geringer wird als eine Wahrscheinlichkeit für eine logische 0. Ein derartiges Verhalten, beispielsweise der Auswerteeinheit 30, kann von der Überwachungseinheit 60 detektiert werden.

Um zusätzlich die Robustheit des Quantum-Zufallszahlengenerators 10 zu erhöhen, so dass er eine ungestörte Zufallszahlengenerierung trotz eines aktiven äußeren Angriffs vornehmen kann, lässt sich beispielsweise die logische Zuordnung der Zeitintervalle invertieren. Während beim normalen Messablauf die Abfolge a, b, a, b, ... lautet, kann bei einem robusten Messablauf die Folge a, b, b, a, ... lauten. Beispielsweise kann also das Zeitintervall a = t1 - t0 und b = t3 - t2 im Normalbetrieb sein. In einem robusten Betrieb könnte die Zuordnung teilweise umgedreht werden, so dass b = t1 - t0 und a = t3 - t2 ist.

Figur 6 zeigt eine schematische Darstellung eines Grafikchips 90, der einen erfindungsgemäßen Quantum-Zufallszahlengenerator 10 umfasst. Dieser Quantum-Zufallszahlengenerator 10 kann wie oben beschrieben ausgebildet sein, beispielsweise gemäß Figur 2 oder 4.

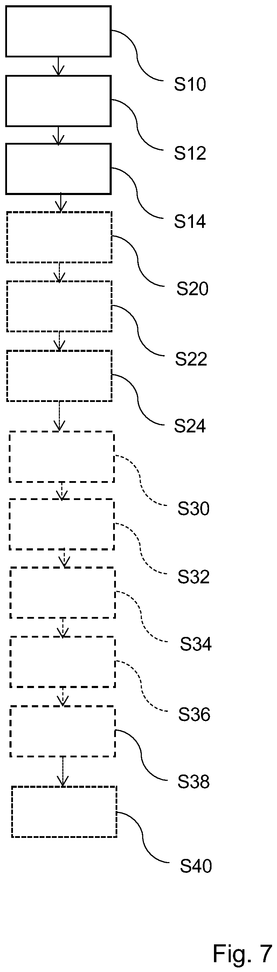

Figur 7 zeigt den prinzipiellen Ablauf des erfindungsgemäßen Verfahrens, um einen Quantum-Zufallszahlengenerator vor einer externen Manipulation zu schützen und derartige Manipulationen zu erkennen. Der Quantum-Zufallszahlengenerator 10 hat wenigstens zwei Verarbeitungskanäle 70, wobei jeder der Kanäle je eine Entropiequelle 20 und wenigstens eine Auswerteeinheit 30 umfasst. Das Verfahren weist mehrere Schritte auf:
In einem ersten Schritt S10 erfolgt das Zwischenspeichern der von der Auswerteeinheit 30 generierten Zufallszahlen in einem Buffer. Dieser Buffer kann ein Zwischenspeicher sein. Der Buffer kann ein einzelnes Bauteil für jeden der Verarbeitungskanäle 70 darstellen. Er kann in dem Quantum-Zufallszahlengenerator 10 integriert sein.

In einem weiteren Schritt S12 wird die Verteilung der Zufallszahlen im Buffer ermittelt. Zusätzlich oder alternativ kann die Verteilung der Zufallszahlen auch in einem Zwischenspeicher eines Verarbeitungskanals 70 erfolgen.

In einem weiteren Schritt S14 wird erfindungsgemäß ein Abbruchsignal und/oder ein Warnsignal erzeugt, wenn beim Ermitteln der Verteilung eine Ungleichverteilung der Werte der Zufallszahlen festgestellt wird. Hierbei wird bevorzugt die Verteilung der Zufallszahlen über eine vorgegebene Zeitspanne überwacht und beurteilt. Damit wird sichergestellt, dass eine genügend große Anzahl von Zufallszahlen betrachtet wird. Bei einer geringen Anzahl von Zufallszahlen kann durchaus eine Ungleichverteilung vorliegen, solange auch sie unterhalb eines vorgegebenen Limits liegt. Die Zufallszahlen, die bevorzugt Binär-Zufallszahlen sind, können folglich zwei Kategorien aufweisen, nämlich eine logische 1 und eine logische 0. Die Ungleichverteilung zeigt also, dass die Anzahl von Zufallszahlen in einer Kategorie deutlich größer ist als in der anderen Kategorie, was auf eine externe Manipulation hindeutet.

In einer bevorzugten Ausführungsform umfasst das Verfahren weitere optionale Schritte S20 bis S24, die gestrichelt dargestellt sind. Ein Schritt S20 betrifft das Erfassen einer Eventrate, wenigstens einer der Entropiequellen 20. In einem weiteren Schritt S22 wird überprüft, ob die Eventrate in einem zulässigen vordefinierten Bereich liegt. Dabei wird überprüft, ob in einem vorgegebenen Zeitintervall genügend Events erzeugt werden oder ob die Anzahl der Events einen zulässigen Schwellwert nicht überschreiten, also ob nicht zu viele Events innerhalb einer Zeitspanne erzeugt werden. Auch dies ließe auf einen Einfluss von außen schließen.

In einem weiteren Schritt S24 wird ein Abbruchsignal oder ein Warnsignal erzeugt, wenn die Eventrate außerhalb des zulässigen und vordefinierten Bereichs liegt. Der Bereich kann jeweils von dem Einsatz des Verfahrens und der jeweiligen Applikation abhängen.

In einer weiteren bevorzugten Ausführungsform umfasst das Verfahren zusätzliche optionale Schritte S30 bis S38. In dem Schritt S30 erfolgt das Ermitteln von zwei Gruppen von je zwei Events einer Entropiequelle (20). Optional können die Zeiten oder die Zeitintervalle zwischen zwei Events jeder Gruppe zusätzlich ermittelt und/oder gezählt werden. Möglich ist es, dass nur die Events detektiert und direkt, bevorzugt ohne Verzögerung (um mehr als einen Takt), weitergegeben werden.

In einem weiteren Schritt S32 werden die Events und optional die Zeiten, an denen die Events auftreten, an je eine Auswerteeinheit 30 eines Verarbeitungskanals 70 übermittelt. Bevorzugt werden nur die Events an die Auswerteeinheit 30 übermittelt und hier die Zeiten festgelegt. Eine Zeit kann dabei durch Starten eines Zählers, beispielsweise eines TDCs, oder durch ein Zählen ermittelt werden.

Zählen im Sinne der Erfindung wird nicht nur als Erhöhen eines Wertes um einen Zählwert oder Erniedrigen eines Startwertes um einen Zählwert verstanden. Vielmehr kann Zählen allgemein bedeuten, dass einer vorgegebenen oder variablen Anzahl von Zeitschlitzen zwischen zwei Events genau ein eindeutig bijektiv zuzuordnender jeweiliger Zählwert je jeweiligem Zeitschlitz paarweise zugeordnet wird, wodurch dann eine eineindeutige umkehrbare Beziehung zwischen Zeitschlitz und Zählwert besteht. Bevorzugt wird der letzte Zählwert vor dem Erkennen des nächsten Events verwendet. Die Zeitschlitze können etwa durch eine, bevorzugt vom Takt des Generators bestimmte Zeitscheibe erzeugt werden. Die Reihenfolge der Zählwerte kann dann beispielsweise mittels eines beispielsweise durch den Takt des Generators betriebenen Pseudozufallszahlengenerators festgelegt werden, wobei lediglich sichergestellt werden muss, dass jeder Zählwert nur einmal in dem jeweiligen Zählintervall vorkommt. Die Anzahl der Zählwerte kann von dem zeitlichen Unterschied des Auftretens der Events abhängen. Die Zählwerte als Pseudozufallszahlen lassen sich beispielsweise mit linear rückgekoppelten Schieberegistern, die etwa mittels einfach primitiver Polynome rückgekoppelt sind, erzeugen.

Ein weiterer Schritt S34 umfasst das Auswerten der Zeiten und Ermitteln der Zeitintervalle zwischen den Zeiten. Ein weiterer Schritt S36 betrifft das Festlegen einer Zufallszahl basierend auf einer Zuordnung einer Kategorie einer Zufallszahl zu den Zeitintervallen. In einem weiteren Schritt S38 umfasst das Verfahren ein sporadisches Ändern dieser Zuordnung. Durch das Ändern der Zuordnung wird ein Schutz gegen ein "Abhören" des Zufallszahlengenerators realisiert, da sich keine Rückschlüsse von Stromspitzen in dem Generator oder von emittiertem Licht beim Erzeugen eines Events zu Zufallszahlen und deren Werte herstellen lässt.

Alternativ können die Schritte S30 und S32 auch umfassen oder ausgebildet sein als: Messen von zwei Zeitintervallen zwischen je zwei Events einer Entropiequelle 20; und Übermitteln der Events und der Zeiten, an denen die Events auftreten, an je eine Auswerteeinheit 30 eines Verarbeitungskanals 70.

Bevorzugterweise umfasst das erfindungsgemäße Verfahren einen weiteren optionalen Schritt S40. Dieser Schritt S40 betrifft das sporadische Ändern der Verlinkung der Bauteile oder Bauelemente der einzelnen Verarbeitungskanäle 70 untereinander. Die Verlinkung erfolgt also derart, dass jeweils ein neuer Verarbeitungskanal 70 gebildet wird, der jedoch mit dem herkömmlichen geplanten Verarbeitungskanal 70 nicht übereinstimmt. Auf diese Weise wird beispielsweise eine Matrix-Anordnung der einzelnen Bauteile oder Bauteilelemente realisiert. Somit sind Rückschlüsse von erzeugten Events auf ausgegebene, verzögerte Zufallszahlen nicht mehr möglich, insbesondere, wenn die Zuordnung der Bauelemente (Entropiequelle, Auswerteeinheit, Zwischenspeicher) unbekannt ist.

Die einzelnen Schritte des Verfahrens und die optionalen Schritte können jedenfalls teilweise in geänderter Reihenfolge ausgeführt werden. Wiederholungen einzelner Schritte sind möglich. Es müssen nicht alle Schritte ausgeführt werden.

Die Schritte des Verfahrens und seine optionalen Schritte können von dem oben beschriebenen Quantum-Zufallszahlengenerator 10 in seinen unterschiedlichen Ausprägungen durchgeführt werden. Teile des Verfahrens können auf verschiedene Komponenten des Quantum-Zufallszahlengenerators 10 aufgeteilt sein und von diesen Komponenten oder Bauelementen ausgeführt werden. Das Verfahren kann ganz oder teilweise computer- und/oder maschinenimplementiert realisiert werden.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit und eine Vorrichtung können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

### Bezugszeichen

- 10: Quantum-Zufallszahlengenerator
- 20: Entropiequelle
- 22: Kopplungselement
- 30: Auswerteeinheit
- 40: Zwischenspeicher
- 50: Ausgabeschnittstelle
- 60: Überwachungseinheit
- 70: Verarbeitungskanal
- 80: Auswahleinheit
- 82: Steuereinheit
- 90: Grafikchip

## Patentansprüche

1. Quantum-Zufallszahlengenerator (10) zur Erzeugung von Zufallszahlen umfassend:
- wenigstens zwei Entropiequellen (20) zum Erzeugen eines Events;
- wenigstens eine Auswerteeinheit (30) zur Verarbeitung des Events;
- eine Ausgabeschnittstelle (50) zum Ausgeben einer Binär-Zufallszahl;
wobei
die Entropiequelle (20) eine Photonenquelle und einen Photonenempfänger umfasst;
die Photonenquelle zufällig Photonen emittiert, die von dem Photonenempfänger erfasst werden und als Event an die Auswerteeinheit (30) übermittelt werden;
die Auswerteeinheit (30) dazu ausgebildet ist, um die Events zu verarbeiten und Binär-Zufallszahlen zu generieren, die mittels der Ausgabeschnittstelle (50) ausgegeben werden.

2. Quantum-Zufallszahlengenerator (10) nach Anspruch 1, **dadurch gekennzeichnet, dass** die Entropiequellen (20) miteinander und mit der Auswerteeinheit (30) interagieren.

3. Quantum-Zufallszahlengenerator (10) nach einem der vorhergehenden Ansprüche, **dadurch gekennzeichnet, dass** zwischen den Entropiequellen (20) und der Auswerteeinheit (30) ein Kopplungselement (22) geschaltet ist, das bevorzugt ein Oder-Glied oder ein Multiplexer MUX ist

4. Quantum-Zufallszahlengenerator (10) nach einem der vorhergehenden Ansprüche, **dadurch gekennzeichnet, dass** zwischen der Auswerteeinheit (30) und der Ausgabeschnittstelle (50) ein Zwischenspeicher (40) vorgesehen ist, um die Binär-Zufallszahlen zwischenzuspeichern und verzögert an die Ausgabeschnittstelle (50) weiterzuleiten, wobei die Verzögerung/Verzögerungszeit bevorzugt gesteuert erfolgen kann, besonders bevorzugt von der Entropiequelle (20) oder der Auswerteeinheit (30) gesteuert ist.

5. Quantum-Zufallszahlengenerator (10) nach einem der vorhergehenden Ansprüche, **dadurch gekennzeichnet, dass** mehrere Auswerteeinheiten (30) vorgesehen sind und jede der Entropiequellen (20) mit einer Auswerteeinheit (30) verknüpft ist, wobei zwischen der Auswerteeinheit (30) und der Ausgabeschnittstelle (50) eine Auswahleinheit (80) vorgesehen ist.

6. Quantum-Zufallszahlengenerator (10) nach dem vorhergehenden Anspruch, **dadurch gekennzeichnet, dass** die Anzahl der Entropiequellen (20) gleich der Anzahl der Auswerteeinheiten (30) ist und mehrere Verarbeitungskanäle (70) vorgesehen sind, wobei jeder Verarbeitungskanal (70) eine Entropiequelle (20) und eine Auswerteeinheit (30) umfasst und die Verarbeitungskanäle (70) mit der Auswahleinheit (80) verbunden sind.

7. Quantum-Zufallszahlengenerator (10) nach Anspruch 5 oder 6, **dadurch gekennzeichnet, dass** die Auswahleinheit (80) eine variierende Verbindung zwischen einer der Auswerteeinheiten (30) und der Ausgabeschnittstelle (50) herstellt, wobei die Verbindung dynamisch variiert, gesteuert variiert oder zufällig variiert, wobei die Verbindung auf einem, bevorzugt verzögerten, Zufallswert basiert.

8. Quantum-Zufallszahlengenerator (10) nach einem der Ansprüche 5 bis 7, **dadurch gekennzeichnet, dass** die Auswahleinheit (80) einen Multiplexer, ein XOR-Gatter, einen Addierer oder ein logisches Gatter umfasst.

9. Quantum-Zufallszahlengenerator (10) nach einem der vorhergehenden Ansprüche **dadurch gekennzeichnet, dass** eine Überwachungseinheit (60) vorgesehen ist, die dazu ausgebildet ist, um eine Manipulation von außen zu erkennen und um die Ausgänge der Entropiequellen (20) und/oder die Ausgänge der Auswerteeinheiten (30) und/oder die Ausgänge der Zwischenspeicher (40) zu überwachen, wobei bevorzugt, wenn die Ausgangswerte der gleichen Bauteile gleich oder identisch sind, entweder eine Ausgabe einer Binär-Zufallszahl an der Ausgabeschnittstelle (50) unterbunden und verhindert wird oder alternativ oder zusätzlich eine Warnung ausgegeben wird.

10. Quantum-Zufallszahlengenerator (10) nach dem vorhergehenden Anspruch, **dadurch gekennzeichnet, dass** die Überwachungseinheit (60) dazu ausgebildet ist, um die Anzahl oder Häufigkeit der am Ausgang der Auswerteeinheit (30) und/oder des Zwischenspeichers (40) ausgegebenen Kategorien von Binär-Zufallszahlen zu ermitteln, und bevorzugt eine Manipulation erkennt, wenn die Anzahl der Binär-Zufallszahlen einer Kategorie um einen vorgegebenen Schwellwert größer ist als die Anzahl der Binär-Zufallszahlen der anderen Kategorie, wobei der Schwellwert Null sein kann, oder wenn die Anzahl von Binär-Zufallszahlen einer Kategorie größer ist als ein vorgegebener Schwellwert.

11. Quantum-Zufallszahlengenerator (10) nach Anspruch 9 oder 10, **dadurch gekennzeichnet, dass** die Überwachungseinheit (60) dazu ausgebildet ist, um die Anzahl der aufeinanderfolgenden Binär-Zufallszahlen am Ausgang der Auswerteeinheit (30) und/oder des Zwischenspeichers (40) zu ermitteln und eine Manipulation zu erkennen, wenn die Anzahl aufeinanderfolgender Binär-Zufallszahlen derselben Kategorie größer ist als ein vorgegebener Schwellwert oder als die Anzahl der Binär-Zufallszahlen wechselnder Kategorien, wobei bevorzugt die aufeinanderfolgenden der Binär-Zufallszahlen derselben Kategorie, die den Schwellwert überschreiten, gelöscht werden.

12. Quantum-Zufallszahlengenerator (10) nach einem der Ansprüche 9 bis 11, **dadurch gekennzeichnet, dass** die Überwachungseinheit (60) dazu ausgebildet ist, um die Anzahl von Binär-Zufallszahlen der gleichen Kategorie in wenigstens zwei Verarbeitungskanälen zu ermitteln und mit der Anzahl von Binär-Zufallszahlen verschiedener Kategorien zu vergleichen und eine Manipulation zu erkennen, wenn die Anzahl gleicher Kategorien größer ist oder um einen Schwellwert über der Anzahl verschiedener Kategorien liegt.

13. Quantum-Zufallszahlengenerator (10) nach einem der vorhergehenden Ansprüche 6 bis 12, **dadurch gekennzeichnet, dass** die Verarbeitungskanäle (70) den gleichen Umgebungsbedingungen ausgesetzt sind, bevorzugt einschließlich einer gleichen Betriebsspannung, Temperatur, Lichteinflüssen, Energiequelle, Stromquelle, mechanischen Beanspruchung.

14. Quantum-Zufallszahlengenerator (10) nach einem der vorhergehenden Ansprüche 6 bis 12, **dadurch gekennzeichnet, dass** der Quantum-Zufallszahlengenerator (10) mehrere Verarbeitungskanäle (70) aufweist, wobei eine Entropiequelle (20) eines Verarbeitungskanals (70) mit einer Auswerteeinheit (30) eines anderen Verarbeitungskanals (70) verbunden ist und/oder eine Auswerteeinheit (30) eines Verarbeitungskanals (70) mit einem Zwischenspeicher (40) eines anderen Verarbeitungskanals (70) verbunden ist, so dass bevorzugt eine Matrixanordnung gebildet wird.

15. Quantum-Zufallszahlengenerator (10) nach einem der vorhergehenden Ansprüche, **dadurch gekennzeichnet, dass** die Auswerteeinheit (30) ein erstes Zeitintervall zwischen zwei Events der Entropiequelle (20) bestimmt und ein zweites Zeitintervall zwischen zwei späteren Events bestimmt und in Abhängigkeit der Längen der Zeitintervalle eine Zufallszahl einer Kategorie erzeugt, wobei bevorzugt die Zuordnung der Kategorie zu den Zeitintervalllängen variieren kann.

16. Quantum-Zufallszahlengenerator (10) nach einem der vorhergehenden Ansprüche, **dadurch gekennzeichnet, dass** eine Prüfeinheit vorhanden ist, die ein Fehlersignal in einem oder mehreren Verarbeitungskanälen (70) erzeugt und einen Selbsttest der Überwachungseinheit (60) initiiert.

17. Grafikchip (90) mit einem Quantum-Zufallszahlengenerator (10) nach einem der vorhergehenden Ansprüche.

18. Verfahren zum Sichern eines Quantum-Zufallszahlengenerators (10) gegen Manipulationen von außen, wobei der Quantum-Zufallszahlengenerator (10) wenigstens zwei Verarbeitungskanäle (70) mit je einer Entropiequelle (20) und mit einer Auswerteeinheit (30) hat, umfassend die folgenden Schritte:
Zwischenspeichern der generierten Zufallszahlen in einem Buffer;
Ermitteln einer Verteilung der Zufallszahlen im Buffer;
Erzeugen eines Abbruchsignals und/oder Warnsignals, wenn eine Ungleichverteilung gegeben ist.

19. Verfahren nach dem vorhergehenden Anspruch, **gekennzeichnet durch** die weiteren Schritte:
Erfassen einer Eventrate wenigstens einer Entropiequelle (20);
Überprüfen, ob die Eventrate in einem zulässigen, vordefinierten Bereich liegt;
Erzeugen eines Abbruchsignals und/oder Warnsignals, wenn die Eventrate außerhalb des zulässigen, vordefinierten Bereichs liegt.

20. Verfahren nach Anspruch 18 oder 19, **gekennzeichnet durch** die weiteren Schritte:
Ermitteln von zwei Gruppen von je zwei Events einer Entropiequelle (20) und optional von zwei Zeitintervallen zwischen zwei Events jeder Gruppe;
Übermitteln der Events und optional der Zeiten an je eine Auswerteeinheit (30) eines Verarbeitungskanals (70);
Auswerten der Zeiten und Ermitteln von Zeitintervallen zwischen den Zeiten;
Festlegen einer Zufallszahl basierend auf einer Zuordnung einer Kategorie einer Zufallszahl zu den Zeitintervallen;
sporadisches Ändern der Zuordnung.

21. Verfahren nach einem der Ansprüche 18 bis 20, **gekennzeichnet durch** den weiteren Schritt:
sporadisches Ändern der Verlinkung der Bauelemente zwischen den Verarbeitungskanälen.
